# EUROPEAN PATENT SPECIFICATION

(11) **EP 1 826 027 B1**
(45) Date of publication and mention of the grant of the patent: **21.04.2010**
(21) Application number: 05814718.2
(22) Date of filing: 08.12.2005
(51) Int. Cl.: B60C 11/12

(54) **PNEUMATIC TIRE**
LUFTREIFEN
PNEUMATIQUE

(30) Priority: 09.12.2004 JP 2004357211
(43) Date of publication of application: 29.08.2007
(73) Proprietor: Bridgestone Corporation, Tokyo 104-8340 (JP)
(72) Inventor: YOSHIDA, Go c/oBRIDGESTONE CORPORATION, Tokyo, 104-8340 (JP)
(74) Representative: Whalley, Kevin
(86) International application number: PCT/JP2005/022546
(87) International publication number: WO 2006/062156

(56) References cited:
- JP-A- 8 230 417
- JP-A- 02 267 006
- JP-A- 04 215 505
- JP-A- 06 127 217
- JP-A- 2001 191 739
- JP-A- 2001 322 408
- JP-A- 2003 094 910
- JP-A- 2003 226 116

## Description

The present invention relates to a pneumatic tire, and particularly to a pneumatic tire with improved snow/ice performance, wet performance, and wear resistance.

Conventional winter tires, particularly heavy-duty pneumatic tires, have blocks in their treads. The blocks are sectioned by circumferential grooves and lug grooves, and sipes are formed in the blocks. (See, for example, Japanese Patent Application Laid-Open (JP-A) No. 2002-362114.)

In order to improve snow/ice performance and wet performance of a pneumatic tire, improving edge factor is effective.

Further, as for snow performance in particular, forming lug grooves which connect circumferential main grooves formed adjacent to each other in the tread is effective.

Attention is also drawn to one disclosure of JP-2001-322408 A.

The winter tires have the independent blocks formed in their treads by the circumferential main grooves and the lug grooves. However, when sipes are formed simply to improve the edge factor, block rigidity decreases, and the blocks are significantly deformed. Consequently, snow/ice performance does not improve, and block durability is adversely affected due to the blocks being chipped away or the like.

Thus, it is essential for the independent blocks to maintain the block rigidity and improve the edge factor at the same time.

In the conventional art, the block rigidity may decrease when the edge factor is increased.

The present invention has been devised to address the above-described problems and has an object to provide a pneumatic tire with improved snow/ice performance, wet performance, and wear resistance in particular.

The invention provides a pneumatic tire comprising, in a tread, at least two circumferential grooves extending along a tire circumferential direction, a plurality of lug grooves extending in a direction crossing the circumferential grooves, and a plurality of blocks sectioned by the circumferential grooves and the lug grooves, wherein: each of the blocks has a circumferential sipe connecting the lug grooves to each other formed on both sides of the circumferential sipe in the tire circumferential direction, and two lateral sipes formed at both sides of one circumferential sipe and extending from the circumferential sipe to a block end in a tire width direction; and the circumferential sipe extends so as to change the direction thereof at least once.

Next, operation of the pneumatic tire according to the invention will be described.

By forming the circumferential sipes in the blocks, the edge factor mainly effective in a lateral direction (cornering) is obtained. The circumferential sipes also have edge factor effective in the circumferential direction (traction and braking) since they extend so as to change their direction at least once.

Moreover, the block is divided into two small blocks by the circumferential sipe. Since the circumferential sipe extends so as to change the direction thereof at least once, the circumferential sipe has at least a portion which is angled with respect to the tire circumferential direction.

Thus, when a force acts on the block in the circumferential direction due to traction or braking, faces of the portion of the circumferential sipe which are angled with respect to the tire circumferential direction (i.e., side walls of the small blocks) contact each other strongly. Therefore, collapse of the small blocks in the tire circumferential direction is suppressed, and block rigidity (against the circumferential direction) at the time of ground contact is improved. This improves the wear resistance of the blocks.

Since the two lateral sipes are formed in each of the small blocks, high performance of traction and braking on icy and snowy road surfaces and wet road surfaces is obtained while required block rigidity is maintained.

In a preferred aspect of the invention, the angle of groove faces of the lug grooves with respect to a tire axial direction is in the range of 0 to 10°, the two lateral sipes are parallel to each other, and the angle of the two lateral sipes with respect to the tire axial direction is in the range of 0 to 10°.

Operation of the pneumatic tire according to the above-described preferred aspect will be described next.

The angle of the faces of the lug grooves, and the angle of the two lateral sipes are set to 0 to 10° with respect to the tire axial direction. Thus, when the blocks leave a road surface, particularly a snowy and icy road surface, the lateral sipes can be opened quickly to drain the water inside the sipes effectively, whereby snow/ice performance can be improved.

When the aforementioned angle exceeds 10°, opening of the lateral sipes becomes late.

Further, it is preferable that the faces of the lug grooves and the lateral sipes are inclined in the same direction and have the same angle.

In the invention, the space between the two lateral sipes is in the range of 3 to 7 mm.

Operation of the pneumatic tire according to the invention will be described next.

By forming the two lateral sipes in the circumferential direction intermediate portion of each of the small blocks divided by the circumferential sipes, the small block is further divided into three small blocks in the tire circumferential direction.

By setting the space between the two lateral sipes to 3 to 7 mm, the dimension of, among the three small blocks, the center small block in the tire circumferential direction is made smaller than that of the small blocks at both sides, and the rigidity of the center small block can be made smaller than that of the small blocks at both sides.

Thus, when the block contacts the road surface and is subject to a friction force in a tangential direction of the outer circumference of the tire at the time of driving or braking, the amount of deformation (collapse) of the small blocks at both sides of the center small block is small, while that of the center small block is larger.

For this reason, one of the two lateral sipes is closed, while the other lateral sipe is opened, whereby an edge at a step-in side of the center small block reliably contacts the road surface. The edge effect provided by this edge can improve snow/ice performance.

When the space between the two lateral sipes is less than 3 mm, rigidity of the center small block becomes too low, and durability of the center small block also decreases.

When the space between the two lateral sipes exceeds 7 mm, on the other hand, the difference in rigidity between the center small block and the small blocks at both sides becomes small. Because of this, it is difficult for the lateral sipe to open at the time of braking and driving, and the edge effect may be insufficient.

In the invention, the depth of the lug grooves, the circumferential sipe, and the lateral sipes is preferably at least 50% of the depth of the circumferential grooves.

Operation of the pneumatic tire according to the above-described preferred aspect will be described next.

When the depth of the lug grooves, the circumferential sipes, and the lateral sipes is less than 50% of the depth of the circumferential grooves, high performance of traction and braking on snowy and icy road surfaces and wet road surfaces is not obtained. Further, the edge effect becomes insufficient in the late stage of wear.

The upper limit of the depth of the lug grooves, the circumferential sipe, and the lateral sipes is 100% of the depth of the circumferential grooves.

As described above, the pneumatic tire of the present invention has an excellent effect of improving snow/ice performance, wet performance, and wear resistance.

The invention will be further described with reference to the accompanying drawings, in which
Fig. 1 is a plan view of a tread of a pneumatic tire in accordance with an embodiment of the present invention.
Fig. 2 is an enlarged plan view of a first block.
Fig. 3 is an enlarged plan view of a second block.
Fig. 4 is a plan view of a tread of a pneumatic tire in a Conventional Example.
Fig. 5 is a graph showing the relationship between the amount of opening of sipes and the time elapsed.

An embodiment of the present invention will be described in detail below with reference to the drawings.

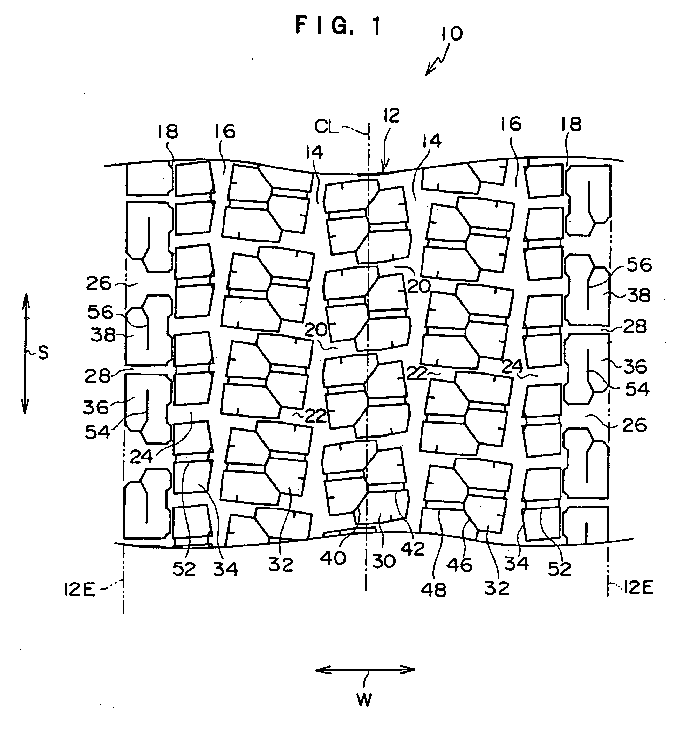

As shown in Fig. 1, in a tread 12 of a pneumatic tire 10 in the present embodiment, first circumferential grooves 14 are formed at both sides of a tire equatorial plane CL and extend along a tire circumferential direction (direction of arrow S). Further, second circumferential grooves 16 are formed at outer sides of the first circumferential grooves 14 in a tire width direction. Furthermore, third circumferential grooves 18 are formed at outer sides of the second circumferential grooves 16 in the tire width direction.

Also formed in the tread 12 are first lug grooves 20 connecting the first circumferential grooves 14 to each other, second lug grooves 22 connecting the first circumferential groove 14 to the second circumferential groove 16, third lug grooves 24 connecting the second circumferential groove 16 to the third circumferential groove 18, and fourth lug grooves 26 and fifth lug grooves 28 extending from the third circumferential groove 18 toward a tread end 12E.

First blocks 30 are sectioned by the first circumferential grooves 14 and the first lug grooves 20. Second blocks 32 are sectioned by the first circumferential groove 14, the second circumferential groove 16, and the second lug grooves 22. Third blocks 34 are sectioned by the second circumferential groove 16, the third circumferential groove 18, and the third lug grooves 24. Fourth blocks 36 and fifth blocks 38 are sectioned by the third circumferential groove 18, the fourth lug grooves 26, and the fifth lug grooves 28.

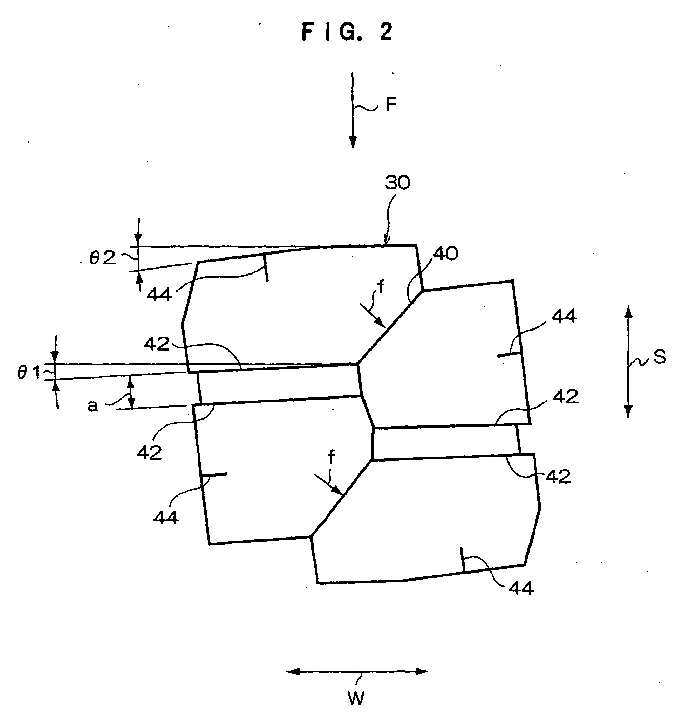

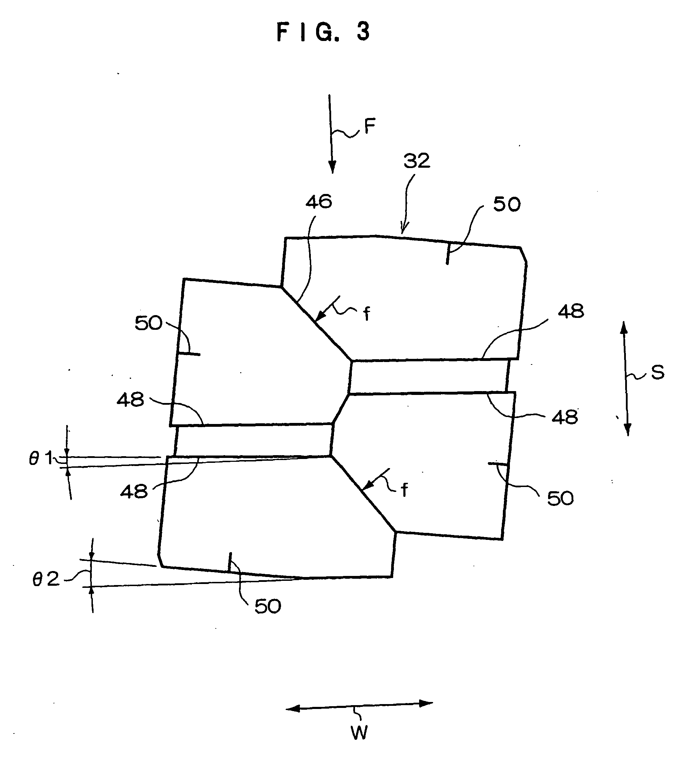

An angle θ2 of the first lug groove 20 with respect to a tire axial direction (see Fig. 2) is preferably in the range of 0 to 10°. Similarly, an angle θ2 of the second lug groove 22 with respect to the tire axial direction (see Fig. 3) is preferably in the range of 0 to 10°.

In the first block 30, a circumferential sipe 40 which is bent and extends substantially in the tire circumferential direction (direction of arrow S) is formed at the tire width direction (direction of arrow W) central portion. Two lateral sipes 42 extending in the tire width direction are formed at both sides of the circumferential sipe 40. Further, short sipes 44 are formed in the first block 30.

The circumferential sipe 40 is bent once or more, and four times in the present embodiment, at an intermediate portion thereof. Although the circumferential sipe 40 mainly has edge factor in the tire circumferential direction, it also has edge factor in the tire width direction.

The lateral sipes 42 are formed parallel to each other. It is preferable that an angle θ1 of the lateral sipe 42 with respect to the tire axial direction is in the range of 0 to 10°. The spacing "a" between the two lateral sipes 42 is in the range of 3 to 7 mm.

As shown in Fig. 3, a circumferential sipe 46, lateral sipes 48, and short sipes 50 are formed in the second block 32 in the same way as in the first block 30.

As shown in Fig. 1, two lateral sipes 52 extending in the tire width direction are formed in the third block 34.

Moreover, a circumferential sipe 54 extending in the tire circumferential direction is formed in the fourth block 36, and a circumferential sipe 56 extending in the tire circumferential direction is formed in the fifth block 38.

In the present embodiment, the first circumferential groove 14, the second circumferential groove 16, and the third circumferential groove 18 have the same depth.

The depth of the first lug groove 20, the second lug groove 22, the third lug groove 24, the fourth lug groove 26, the fifth lug groove 28, the circumferential sipe 40, the lateral sipe 42, the circumferential sipe 46, and the lateral sipe 48 is preferably set to be in the range of 50% to 100% of the depth of the aforementioned circumferential grooves.
Since the circumferential sipe 40 formed in the first block 30 extends so as to be bent in the tire circumferential direction, the circumferential sipe 40 mainly has edge factor effective in a lateral direction (cornering) and also has edge factor effective in the circumferential direction (traction and braking).

Since the circumferential sipe 40 extends so as to change the direction thereof four times, the circumferential sipe 40 has portions which are angled with respect to the tire circumferential direction.

The first block 30 is divided in the tire width direction by the circumferential sipe 40. When a force F (see Fig. 2) acts on the first block 30 in the circumferential direction due to traction or braking, a force acts on divided small blocks of the first block 30 in a direction of arrow f such that the sipes 40 are closed. Thus, the faces of the portions of the circumferential sipe 40 which are angled with respect to the tire circumferential direction (i.e., side walls of the small blocks) contact each other strongly, and collapse of the small blocks in the tire circumferential direction is suppressed. As a result, block rigidity (against the circumferential direction) at the time of ground contact is improved, and wear resistance of the first block 30 can be improved.

Further, since the two lateral sipes 42 are formed at each of the right and left small blocks divided by the circumferential sipe 40, high performance of traction and braking on snowy and icy road surfaces and wet road surfaces can be obtained.

Since the second block 32 includes the circumferential sipe 46 and the lateral sipes 48 and has the same structure as the first block 30, wear resistance can be improved. Further, high performance of traction and braking on snowy and icy road surfaces and wet road surfaces can be obtained.

By setting the angle θ2 of the faces of the first lug groove 20 and the second lug groove 22 with respect to the tire axial direction to be 0 to 10°, the effects of traction and braking on snowy and icy road surfaces and wet road surfaces can be maximized. If the angle θ2 exceeds 10°, high performance of traction and braking on snowy and icy road surfaces and wet road surfaces cannot be obtained.

Similarly to the first lug groove 20 and the second lug groove 22, in the case of the two lateral sipes 42 and 48 as well, the effects of traction and braking on snowy and icy road surfaces and wet road surfaces can be maximized by setting the angle θ1 of the lateral sipes 42 and 48 with respect to the tire axial direction to be 0 to 10°. If the angle θ1 of the lateral sipes 42 and 48 exceeds 10°, high performance of traction and braking on snowy and icy road surfaces and wet road surfaces cannot be obtained.

Further, by setting each of the space between the two lateral sipes 42 and the space between the two lateral sipes 48 to be in the range of 3 to 7 mm, one of the lateral sipes 42 can be reliably opened at the time of ground contact, whereby the edge effect can be reliably obtained at an edge of the small block between the sipes.

If the space between the two lateral sipes 42 is less than 3 mm, rigidity of the small block between the sipes becomes too low, and durability of the small block also decreases.

If the space between the two lateral sipes 42 exceeds 7 mm, on the other hand, the difference in rigidity between the small block between the sipes and the small blocks at both sides becomes small. Because of this, it is difficult for the lateral sipe 42 to open at the time of braking and driving, and the edge effect may be insufficient.

If the depth of the lug grooves, the circumferential sipes, and the lateral sipes is less than 50% of the depth of the circumferential grooves, high performance of traction and braking on snowy and icy road surfaces and wet road surfaces cannot be obtained. Further, the edge effect becomes insufficient in the late stage of wear.

In the present embodiment, the circumferential sipes 40 and 46 are bent four times at the intermediate portions thereof. However, it suffices that the circumferential sipes 40 and 46 are bent at least once, and the number of times of bending is not limited to that described in the present embodiment.

### Test Example 1

In order to verify the effects of the present invention, a tire for a Conventional Example and a tire for an Example to which an aspect of the present invention was applied were prepared, and tests of braking performance and uneven wear were carried out. Further, for blocks of each tire, the length of the edge factor when edge portions were projected in the tire width direction was measured, and block rigidity (shear in the tire circumferential direction) was examined.

The Example tire is a tire having the pattern described in the above embodiment (see Figs. 1 to 3).

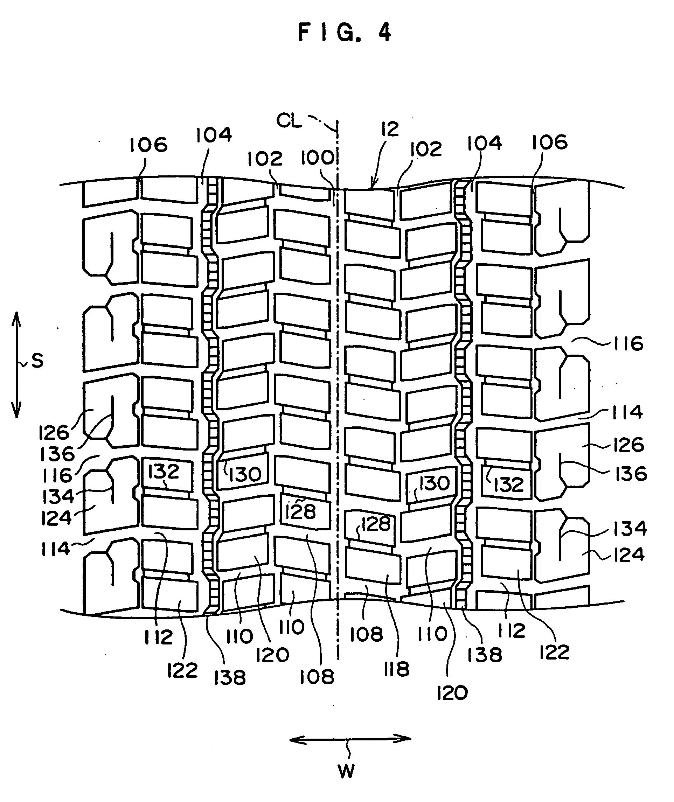

The Conventional Example tire is a tire having a pattern shown in Fig. 4. In Fig. 4, reference numerals 100, 102, 104, and 106 indicate circumferential grooves, reference numerals 108, 110, 112, 114, and 116 indicate lug grooves, reference numerals 118, 120, 122, 124, and 126 indicate blocks, reference numerals 128, 130, and 132 indicate lateral sipes, and reference numerals 134 and 136 indicate circumferential sipes.

The main difference between the Conventional Example tire and the Example tire is the shape of the blocks 118 and 120 disposed near the center of the tread.
Test of braking performance on wet road surfaces: A tire (size: 11R225 14PR, internal pressure: 700 kpa according to the JATMA standards) was mounted on each of shafts of an actual vehicle (a two-wheel drive vehicle with ABS under constant volume conditions), and the stopping distance of the vehicle traveling at 50 km/h and 30 km/h on a wet road surface having steel plates placed thereon was measured five times for each case. The evaluation is expressed as an index with the reciprocal of the average of the stopping distance in Conventional Example being 100. The higher the index is, the better the braking performance on wet road surfaces is. The results of the evaluation are as shown in Table 1.
• Test of braking performance on snowy and icy road surfaces: A test similar to the test of braking performance on wet road surfaces was carried out on snowy and icy road surfaces. The higher the index is, the better the braking performance on snowy and icy road surfaces is. The results of the evaluation are as shown in Table 1.
• Test of uneven wear: The test tires were mounted on an actual vehicle, and the vehicle was made to travel on a general road (paved road) for 10000 km. Subsequently, the amount of unevenness (unit: mm) caused by heel and toe wear of blocks was measured.

**Table 1**

| | Edge Factor (Projection in Tire Width Direction) | | Block Rigidity (Shear) | Braking Performance (Deceleration Index) | | Uneven Wear Amount of Heel and Toe Unevenness Unit: mm |
|---|---|---|---|---|---|---|
| | Lug Grooves and Sipes | Lug Grooves Only | | Wet Road Surfaces | Snowy and Icy Road Surfaces | |
| Conventional Example | 100 | 100 | 100 | 100 | 100 | 1.8 - 2.3 |
| Example | 110 | 100 | 140 | 115 | 110 | 0.7 - 1.1 |

It can be seen from the results of the tests that braking performance of the Example tire to which an aspect of the present invention is applied is improved as compared with that of the Conventional Example tire. This is because of the edge effect of the circumferential sipes of the Example tire which are formed in the blocks and extend so as to change their direction.

It can also be seen that the Example tire to which an aspect of the present invention is applied has less uneven wear than the Conventional Example tire. Namely, uneven wear resistance of the former is improved as compared with that of the latter. This is because the circumferential sipes 40 and 46 which extend in the tire circumferential direction on the whole while changing their direction four times are formed in the first block 30 and the second block 32 of the Example tire, respectively, to improve block rigidity at the time of ground contact.

The second block 32 in the Example corresponds to the blocks 118 and 120 in the Conventional Example being made to abut each other with a sipe formed therebetween. Namely, in the Conventional Example, since the block 118 is separated from the block 120 by the circumferential groove 102, each of the blocks easily collapses at the time of driving and braking as compared with the blocks in the Example. Because of the structure of the blocks, the Conventional Example tire is unfavorable in terms of uneven wear.

### Test Example 2

A tire having blocks (the first blocks 30 and the second blocks 32) in which the angle of faces of lug grooves and lateral sipes with respect to the tire axial direction is set to 9°, and a tire having blocks (the first blocks 30 and the second blocks 32) in which the angle of faces of lug grooves and lateral sipes with respect to the tire axial direction is set to 15° were manufactured experimentally. For blocks of each of the tires, the relationship between the time elapsed and the amount of opening of the sipes was examined. This relationship is shown in a graph in which the time elapsed is indicated by a horizontal axis and the amount of opening of the sipes (mm) is indicated by a vertical axis, with the point of time being zero when the block ends brought into contact with the ground by the rotation of the tire start to leave a road surface.

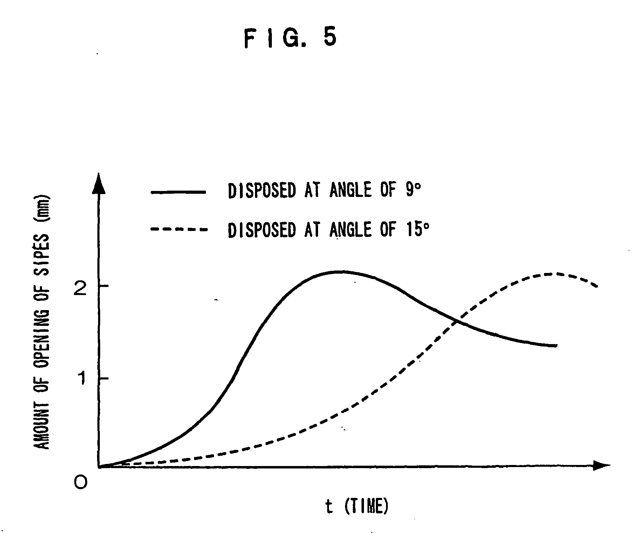

A solid line of a graph shown in Fig. 5 indicates measured values of the blocks in which the angle of the lug grooves and the lateral sipes is set to 9°, while a dotted line indicates measured values of the blocks in which the angle of the lug grooves and the lateral sipes is set to 15°.

It can be seen from the test results that opening of the lateral sipes of the blocks in which the angle of the lug grooves and the lateral sipes is set to 9° is faster. When the lateral sipes are opened fast, water picked up from the road surface can be drained out of the sipes quickly and effectively, which is preferable for improvement in snow/ice performance.

The pneumatic tire of the present invention has high snow/ice performance, wet performance and wear resistance, and is preferable for use in winter.

## Claims

1. A pneumatic tire (10) comprising, in a tread (12), at least two circumferential grooves (14, 16, 18) extending along a tire circumferential direction, a plurality of lug grooves (20, 22) extending in a direction crossing the circumferential grooves, and a plurality of blocks (30, 32) sectioned by the circumferential grooves and the lug grooves, wherein:
each of the blocks (30, 32) has a circumferential sipe (40, 46) connecting the lug grooves (20, 22) to each other formed on both sides of the circumferential sipe in the tire circumferential direction, and two lateral sipes (42, 48) formed at both sides of the circumferential sipe and extending from the circumferential sipe to a block end in a tire width direction; and the circumferential sipe extends so as to change the direction thereof at least once;
and wherein each of the blocks (30, 32) is divided by the lateral sipes (42, 48) into three small blocks formed at both sides of the circumferential sipe, the space between the two lateral sipes formed at both sides the circumferential sipe is in the range of 3mm to 7mm, and the length in the circumferential direction of the center small block delimited by the two lateral sipes (42, 48) formed at both sides of the circumferential sipe is smaller than that of the small blocks at both sides in the circumferential direction of the center block.

2. A pneumatic tire as claimed in claim 1, wherein the angle of groove faces of the lug grooves (20, 22) with respect to a tire axial direction is in the range of 0 to 10°, the two lateral sipes (42, 48) are parallel to each other, and the angle of the two lateral sipes with respect to the tire axial direction is in the range of 0 to 10°.

3. A pneumatic tire as claimed in claim 1 or 2, wherein the depth of the lug grooves (20, 22), the circumferential sipe (40, 46), and the lateral sipes (42, 48) is at least 50% of the depth of the circumferential grooves (14, 16, 18).

4. A pneumatic tire as claimed in any of claims 1 to 3, wherein the circumferential sipe (40, 46) extends to as to change the direction thereof four times.

## Patentansprüche

1. Luftreifen (10), der, in einer Lauffläche (12), wenigstens zwei umlaufende Rillen (14, 16, 18), die sich längs einer Reifenumfangsrichtung erstrecken, mehrere Stollenrillen (20, 22), die sich in einer Richtung, quer zu den umlaufenden Rillen, erstrecken, und mehrere Blöcke (30, 32), die durch die umlaufenden Rillen und die Stollenrillen unterteilt werden, umfasst, wobei:
jeder der Blöcke (30, 32) eine umlaufende Lamelle (40, 46), welche die auf beiden Seiten der umlaufenden Lamelle in der Reifenumfangsrichtung geformten Stollenrillen (20, 22) miteinander verbindet, und zwei seitliche Lamellen (42, 48), die auf beiden Seiten der umlaufenden Lamelle geformt sind und sich von der umlaufenden Lamelle bis zu einem Blockende in einer Reifenbreitenrichtung erstrecken, hat und sich die umlaufende Lamelle so erstreckt, dass sich die Richtung derselben wenigstens einmal ändert,
und wobei jeder der Blöcke (30, 32) durch die seitlichen Lamellen (42, 48) in drei kleine Blöcke geteilt wird, die auf beiden Seiten der umlaufenden Lamelle geformt sind, wobei der Raum zwischen den zwei seitlichen Lamellen, die auf beiden Seiten der umlaufenden Lamelle geformt sind, in dem Bereich von 3 mm bis 7 mm liegt und die Länge in der Umfangsrichtung des mittleren kleinen Blocks, der durch die zwei seitlichen Lamellen (42, 48), die auf beiden Seiten der umlaufenden Lamelle geformt sind, begrenzt wird, kleiner ist als diejenige der kleinen Blöcke auf beiden Seiten in der Umfangsrichtung des mittleren Blocks.

2. Luftreifen nach Anspruch 1, wobei der Winkel der Rillenflächen der Stollenrillen (20, 22) in Bezug auf eine Reifenaxialrichtung in dem Bereich von 0 bis 10° liegt, die zwei seitlichen Lamellen (42, 48) parallel zueinander sind und der Winkel der zwei seitlichen Lamellen in Bezug auf die Reifenaxialrichtung in dem Bereich von 0 bis 10° liegt.

3. Luftreifen nach Anspruch 1 oder 2, wobei die Tiefe der Stollenrillen (20, 22), der umlaufenden Lamelle (40, 46) und der seitlichen Lamellen (42, 48) wenigstens 50 % der Tiefe der umlaufenden Rillen (14, 16, 18) beträgt.

4. Luftreifen nach einem der Ansprüche 1 bis 3, wobei sich die umlaufende Lamelle (40, 46) so erstreckt, dass sich die Richtung derselben viermal ändert.

## Revendications

1. Pneumatique (10) comprenant, dans une bande de roulement (12), au moins deux rainures circonférentielles (14, 16, 18) s'étendant le long d'une direction circonférentielle du pneumatique, une pluralité de rainures (20, 22) de barrettes s'étendant dans une direction traversant les rainures circonférentielles et une pluralité de blocs (30, 32) coupés par les rainures circonférentielles et les rainures de barrettes dans lequel :
chacun des blocs (30, 32) présente une lamelle circonférentielle (40, 46) raccordant les rainures (20, 22) de barrettes l'une à l'autre formées des deux côtés de la lamelle circonférentielle dans la direction circonférentielle du pneumatique et deux lamelles latérales (42, 48) formées des deux côtés de la lamelle circonférentielle et s'étendant de la lamelle circonférentielle à une extrémité de bloc dans le sens de la largeur du pneumatique ; et la lamelle circonférentielle s'étend de manière à changer sa direction au moins une fois ; et
dans lequel chacun des blocs (30, 32) est divisé par les lamelles latérales (42, 48) en trois petits blocs formés des deux côtés de la lamelle circonférentielle, l'espace entre les deux lamelles latérales formées des deux côtés de la lamelle circonférentielle se situe dans la plage de 3 mm à 7 mm et la longueur dans la direction circonférentielle du petit bloc central délimité par les deux lamelles latérales (42, 48) formées des deux côtés de la lamelle circonférentielle est inférieure à celle des petits blocs des deux côtés dans la direction circonférentielle du bloc central.

2. Pneumatique selon la revendication 1, dans lequel l'angle des faces des rainures (20, 22) de barrettes par rapport à une direction axiale du pneumatique se situe dans la plage de 0 à 10 °, les deux lamelles latérales (42, 48) sont parallèles l'une à l'autre et l'angle des deux lamelles latérales par rapport à la direction axiale du pneumatique se situe dans la plage de 0 à 10 °.

3. Pneumatique selon la revendication 1 ou 2, dans lequel la profondeur des rainures (20, 22) de barrettes, de la lamelle circonférentielle (40, 46) et des lamelles latérales (42, 48) est d'au moins 50 % de la profondeur des rainures circonférentielles (14, 16, 18).

4. Pneumatique selon l'une quelconque des revendications 1 à 3, dans lequel la lamelle circonférentielle (40, 46) s'étend de manière à changer sa direction quatre fois.
